# EUROPEAN PATENT APPLICATION

(11) **EP 4 654 113 A1**
(43) Date of publication of application: **26.11.2025**
(21) Application number: 25177141.6
(22) Date of filing: 16.05.2025
(51) Int. Cl.: G06Q 30/0283, G06Q 50/18

(54) **DETERMINATION OF CONTRIBUTION DISTRIBUTION OF ASSETS OWNERS TO THE TRAINING AND THE PRODUCTS OF A GENERATIVE AI MODEL**

(30) Priority: 23.05.2024 US 202463650958 P
(71) Applicant: Layer AI, Middletown, DE 19709 (US)
(72) Inventor: GUREL, Volkan, MIAMI, 33156 (US); RAHKO, Joona, SAN FRANCISCO, 94105 (US); CHEN, Xiaotong, SAN FRANCISCO, 93117 (US); LEMIRE, Jacques, MONTREAL, H2J4E2 (CA); WANG, Harrison, CAMBRIDGE, 02142 (US)
(74) Representative: Plasseraud IP

(57) **Abstract**

The present disclosure provides a solution for determining the extent of contribution of each copyright-protected assets owner to the training of a generative AI model. Furthermore, the present disclosure provides a solution for identifying the specific assets that contributed the most for the generation of a specific generated product being generated by the generative AI model. This is performed based on correlation of metrics related to meta features composing the assets and the generated product. By determining the contribution distribution of the owners to the generative AI model and a specific generated product, the owners can be attributed with recognition for their contribution. The recognition can be manifested in many ways, for example in attribution of copyright or an allocation of an income that is received for the use of the generative AI model according to a certain financial model. Therefore, by the solution of the present disclosure, the use of assets protected by copyrights in the training of generative AI models can be standardized.

## Description

### TECHNOLOGICAL FIELD

The present disclosure is in the field of generative AI models.

### GENERAL DESCRIPTION

The present disclosure provides a solution for determining the extent of contribution of each copyright-protected assets owner to the training of a generative AI model. Furthermore, the present disclosure provides a solution for identifying the specific assets that contributed the most for the generation of a specific generated product being generated by the generative AI model. This is performed based on correlation of metrics related to meta features composing the assets and the generated product. By determining the contribution distribution of the owners to the generative AI model and a specific generated product, the owners can be attributed with recognition for their contribution. The recognition can be manifested in many ways, for example in attribution of copyright or an allocation of an income that is received for the use of the generative AI model according to a certain financial model. Therefore, by the solution of the present disclosure, the use of assets protected by copyrights in the training of generative AI models can be standardized.

Therefore, an aspect of the present disclosure provides a method for determining contribution distribution between assets owners to a generated product being generated by a generative artificial intelligence (AI) model, e.g. images that are generated by a generative AI platform. The method comprises receiving a plurality of assets that contributed to or intended to be used for the training of the AI model, namely the plurality of assets may include assets that already participated in the training of the model or assets that are currently received by the generative AI model for training it. An asset can be any media asset that is qualified to be used in training a generative AI model. This can be, for example, a code, a script, an image, a video, an audio file, a literary creation, an engineering or architectural design, a technological innovation or any other asset that is protected by copyrights. Each asset of the plurality of assets may attributed to at least one owner that owns its copyrights or any other proprietary or intellectual property right (the assets may also include assets with no proprietary rights, for example various images, text, audio, video, etc. on which the copyright has expired). The method further comprises analyzing said plurality of assets to extract from each asset meta features. The meta features can include tagging of the asset, or in the case of graphical assets caption of the asset which can be associated with the asset or can be derived by a Multi Modal Language models, an entity recognition from text associated with the asset, types of objects shown in the asset, style of objects shown in the graphical asset, etc. Based on the extraction of the asset meta features, the method further comprises generating, for each asset of the plurality of assets, an asset data set that comprises owners' data indicative of the owner of the asset and the meta features. Therefore, the asset data set identifies the owner of the asset and includes data characterizing the specific asset. The method further comprises processing the plurality of asset data sets to determine a contribution distribution data indicative of the contribution distribution of assets owners to the training of the model. Namely, the contribution distribution defines the extent of the contribution of each asset owner to the AI model. It should be noted that in some cases the sum of all contributions may be less than 100% of the AI model, for example in the case the contribution also includes assets for which the copyright has expired. The contribution distribution data comprises a contribution score for each asset owner, therefore, the contribution distribution is determined according to the relative score of each assets owner with respect to the total score of all assets owners. It is to be noted that the term "score" should be interpreted as meaning any comparative value that can be used in order to determine the relative contribution of each owner to the entire training of the model. The method further comprises outputting contribution distribution output data that comprises said contribution distribution data for allowing, for example, an execution of distribution of payment for a product generated by the AI model based on the contribution distribution.

It is to be noted that any combination of the described embodiments with respect to any aspect of this present disclosure is applicable. In other words, any aspect of the present disclosure can be defined by any combination of the described embodiments.

In some embodiments, the method further comprises filtering the received plurality of assets, said filtering comprises excluding assets that do not qualify to train the model. This includes assets that falls under the definition of not safe for work (NSFW), such as offensive images, nude images, etc.

In some embodiments the method may comprise filtering for assets that have no rights associated therewith to obtain a generated product free of any third party contribution. This may include, for example, assets for which the copyright has expired, assets that have been released to the public for free use, etc.

In some embodiments, the method further comprises filtering the received plurality of assets, said filtering comprises identifying one or more first assets that are identical or have a degree of similarity higher than a defined threshold to a second asset and excluding the second asset. A second asset may, for example, be an asset that is already part of the model and its training and therefore this asset cannot be included again in the determination of the contribution distribution.

In some embodiments of the method, said plurality of assets are graphical assets and the generated product is a graphical product, namely a drawing or an image.

In some embodiments of the method, said meta features comprises tag of the graphical asset, namely a descriptive label that defines the image or parts thereof, caption associated with the graphical asset, style of the graphical asset, objects in the graphical asset or any combination thereof.

In some embodiments of the method, the plurality of graphical assets comprises images, drawings, photos, or any combination thereof.

In some embodiments of the method, said processing the plurality of asset data sets comprises assigning a quality score to each data set indicative of the quality of the asset for contribution to the training of the generative AI model, wherein the contribution score of each assets owner is determined by the quantity of assets and their quality scores. Namely, the contribution score of each asset owner is determined, among other factors, by a sum of quality scores of all the assets of the owner. The quality score of an asset is determined by at least one of the following, or any combination thereof: (1) crowdsourcing, namely rating of users of the asset owner or specific assets of the asset owner; (2) using AI models, such as Neural Image Assessment (NIMA) or aesthetic Visual Analysis (AVA); (3) comparison of the asset to quality verified assets stored in a database, wherein the degree of similarity to one or more comparable assets from the quality verified assets indicates the quality score of the asset. For example, an asset can have a relatively high degree of similarity to a group of quality verified assets indicating that this asset has a relatively high-quality score.

In some embodiments of the method, each asset data set comprises a time factor indicative of at least one of: the time passed from the inclusion of the asset in the training of the generative AI model, the terms of the copyright or other intellectual property rights, or a combination thereof. The contribution score may be affected based on the time factor. For example, an asset that was introduced into the model a relatively long time as compared to other assets may lead to an increase in the contribution score of the owner. In another example, an asset that its copyrights are about to expire may lead to reduction in contribution score that is attributed to the owner.

In some embodiments, the method further comprises determining the contribution of one or more assets owners to a specific generated product asset by the AI model in response to a guidance prompt, the guidance prompt may include written description and/or an input of an image. The determination of the contribution of one or more assets owners to a specific generated product asset by the AI model in response to a guidance prompt comprises (i) extracting generated product meta features, (ii) identifying matching assets from the plurality of assets that has a degree of correlation of one or more of their asset meta features with one or more of the generated product meta features above a selected threshold, and (iii) defining for the matching assets, based on the degree of correlation, a specific contribution score. The contribution distribution output data further comprises said specific contribution score; therefore the contribution data may include two different scores: a general contribution score and a specific contribution score.

In some embodiments of the method, said plurality of assets are graphical assets and the generated product is a graphical product, and wherein the generated product meta features comprise tag of the generated graphical asset, namely a descriptive label that defines the image or parts thereof, caption associated with the graphical asset, style of the graphical asset, objects in the graphical asset, or any combination thereof.

In some embodiments of the method, said determining further comprises calculating the similarity between a caption attributed to an asset and the guidance prompt for said identifying.

In some embodiments of the method, wherein said determining further comprises calculating the similarity between a tag attributed to an asset and a contextual analysis of the guidance prompt for said identifying. The contextual analysis of the guidance prompt is an analysis that is performed on the input text inserted by the generator/creator of the product. This analysis is intended to interpret whether the input text is correlated with a certain tag associated with graphical assets.

In some embodiments of the method, said determining further comprises calculating the similarity between a tag attributed to an asset and a graphical analysis of an image guidance prompt for said identifying. The graphical analysis of the guidance prompt is an analysis that is performed on the input image inserted by the generator/creator of the product. This analysis is intended to interpret whether the input image is correlated with a certain tag associated with graphical assets.

In some embodiments of the method, said selected threshold is defined to obtain a selected limited number of matching assets with a correlation degree that satisfies a certain condition, e.g. the highest correlation degree. Namely, the assets are ranked by their degree of correlation, in either one or more meta features or an overall degree of correlation, and the matching assets are number of assets that have the highest degree of correlation. In some embodiments, the matching assets may include the highest correlated asset for each meta feature. The number of matching assets can be constant or updated as desired. In some other embodiments, the matching assets may be assets that their degree of correlation exceeded a selected threshold.

In some embodiments of the method, said outputting is triggered in response to a generated product by the AI model.

In some embodiments of the method, said outputting comprises allocation of a payment associated with the generated product by the AI model based on the contribution score.

In some embodiments of the method, said outputting comprises determining distribution parameters for attribution of value associated with the generated product by the AI model based on the contribution score.

In some embodiments, the allocation of the payment associated with the generated product by the AI model is further based on the specific contribution score. Namely, the payment is allocated based on a general contribution score and a specific contribution score. The weights factor that defines the amount of influence of each of the scores on the allocation of the payment can be constant or varied according to specific parameters of each generation of product.

In some embodiments of the method, the contribution score is determined according to at least one of the following parameters: quantity of the assets, promotion factor for owners that are specially related to the generative AI model, e.g. according to a certain contractual agreement or according to any other circumstances, variety score indicative of the uniqueness of the asset in the database (namely how rare this type of asset in the database of the assets that were used for training the generative AI model), community score indicative of an evaluation of users of the value of the asset, virality factor indicative of the virality of the asset in the network, the age of each of the assets, namely, for how long does any one of the assets of the owner is part of the training set of the model. The calculation can be an average age of the plurality of assets of the owner.

In some embodiments, the method further comprises calculating a relative contribution parameter indicative of the relative contribution to the training of the model between assets protected by copyrights and assets not protected by copyrights, namely assets that their copyrights term has ended. For example, X% of the assets that trained the model can be assets protected by copyrights and 100-X% of the assets that trained the model can be assets not protected by copyrights. The distribution output data comprises said relative contribution parameter. Therefore, if a financial model is applied based on the distribution output data, the allocation of the income for using the generative AI model may be depended also based on the relative contribution parameter.

Yet another aspect of the present disclosure provides a system for determining contribution distribution between assets owners for generation of a generated product being generated by a generative artificial intelligence (AI) model. The system comprises:
at least one processing circuitry, i.e. at least one processing unit or processor. The at least one processing circuitry can be cloud-based, either centralized or distributed. The at least one processing circuitry is configured for: receiving a plurality of assets that contributed to or intended to be used for the training of the AI model, wherein each asset of the plurality of assets is attributed to at least one owner that owns its copyrights; analyzing said plurality of assets to extract from each asset meta features, the meta features can include tagging of the asset, or in the case of graphical assets caption of the asset, types of objects shown in the asset, style of objects shown in the asset, etc., and generating, for each asset of the plurality of assets, an asset data set that comprises owners data indicative of the owner of the asset and the meta features; processing the plurality of asset data sets to determine a contribution distribution data indicative of the contribution distribution of assets owners to the training of the model, wherein the contribution distribution data comprises a contribution score for each assets owner, therefore, the contribution distribution is determined according to the relative score of each assets owner with respect to the total score of all assets owners; and outputting contribution distribution output data that comprises said contribution distribution data.

In some embodiments of the system, the processing circuitry is further configured for filtering the received plurality of assets. Said filtering comprises excluding assets that do not qualify to train the model.

In some embodiments of the system, the processing circuitry is further configured for filtering the received plurality of assets, said filtering further comprises identifying assets that are identical or have a degree of similarity higher than a selected threshold to a preceding asset and excluding them.

In some embodiments of the system, said plurality of assets are graphical assets and the generated product is a graphical product.

In some embodiments of the system, said meta features comprise tag of the graphical asset, caption associated with the graphical asset, style of the graphical asset, objects in the graphical asset, or any combination thereof. The meta features may be derived from Multi Modal Language Models that are applied on the graphical assets. For example, by using Multi Modal Language Models captions, texts or words can be derived from images.

In some embodiments of the system, the plurality of graphical assets comprises images, drawings, photos, or any combination thereof.

In some embodiments of the system, the processing circuitry is further configured for determining the contribution of one or more assets owners to a specific generated product asset by the AI model in response to a guidance prompt, the guidance prompt may include written description and/or an input of an image. Said determining the contribution of one or more assets owners to a specific generated product asset by the AI model in response to a guidance prompt comprises: extracting generated product meta features, identifying matching assets from the plurality of assets that has a degree of correlation of one or more of their asset meta features with one or more of the generated product meta features above a selected threshold, and defining for the matching assets, based on the degree of correlation, a specific contribution score. Therefore, said contribution distribution output data further comprises said specific contribution score.

In some embodiments of the system, said plurality of assets are graphical assets and the generated product is a graphical product, and wherein the generated product meta features comprise tag of the generated graphical asset, caption associated with the graphical asset, style of the graphical asset, objects in the graphical asset, or any combination thereof.

In some embodiments of the system, said determining further comprises calculating the similarity between a caption attributed to an asset and the guidance prompt for said identifying.

In some embodiments of the system, said determining further comprises calculating the similarity between a tag attributed to an asset and a contextual analysis of the guidance prompt for said identifying.

In some embodiments of the system, said determining further comprises calculating the similarity between a tag attributed to an asset and a graphical analysis of an image guidance prompt for said identifying.

In some embodiments of the system, said selected threshold is defined to obtain a selected limited number of matching assets with a correlation degree that satisfies a certain condition, e.g. the highest correlation degree. Namely, the assets are ranked by their degree of correlation, in either one or more meta features or an overall degree of correlation, and the matching assets are number of assets that have the highest degree of correlation.

In some embodiments of the system, said outputting is triggered in response to a generated product by the AI model.

In some embodiments of the system, said outputting comprises allocation of a payment associated with the generated product by the AI model based on the contribution score.

In some embodiments of the system, said outputting comprises determining distribution parameters for attribution of value associated with the generated product by the AI model based on the contribution score.

In some embodiments of the system, the contribution score is determined according to at least one of the following parameters: quantity of the assets, promotion factor for owners that are specially related to the generative AI model, e.g. according to a certain contractual agreement or according to any other circumstances, community score indicative of an evaluation of users of the value of the asset, virality factor indicative of the virality of the asset in the network, the age of each of the assets, namely, for how long does any one of the assets of the owner is part of the training set of the model. The calculation can be an average age of the plurality of assets of the owner.

In some embodiments of the system, said processing the plurality of asset data sets comprises assigning a quality score to each data set indicative of the quality of the asset for contribution to the training of the generative AI model, wherein the contribution score of each assets owner is determined by the quantity of assets and their quality scores. The quality score of an asset is determined by at least one of the following, or any combination thereof: (1) crowdsourcing, namely rating of users of the asset owner or specific assets of the asset owner; (2) using AI models, such as Neural Image Assessment (NIMA) or aesthetic Visual Analysis (AVA); (3) comparison of the asset to quality verified assets stored in a database, wherein the degree of similarity to one or more comparable assets from the quality verified assets indicates the quality score of the asset.

In some embodiments of the system, wherein each asset data set comprises a time factor indicative of at least one of: the time passed from the inclusion of the asset in the training of the generative AI model, the copyright term, or a combination thereof. The contribution score is affected based on the time factor.

In some embodiments of the system, the at least one processing circuitry is further configured for calculating a relative contribution parameter indicative of the relative contribution to the training of the model between assets protected by copyrights and assets not protected by copyrights, namely assets that their copyrights term has ended. The distribution output data comprises said relative contribution parameter.

### EMBODIMENTS

The following are optional embodiments and combinations thereof in accordance with aspects of the present disclosure:
**1.** A method for determining contribution to a generated product being generated by a generative artificial intelligence (AI) model, comprising:
   receiving a plurality of assets that contributed to or intended to be used for the training of the AI model, wherein each asset of the plurality of assets is attributed to at least one owner that owns its copyrights;
   analyzing said plurality of assets to extract from each asset meta features and to generate, for each asset of the plurality of assets, an asset data set that comprises owners data indicative of the owner of the asset and the meta features;
   processing the plurality of asset data sets to determine a contribution distribution data indicative of the contribution distribution of assets owners to the training of the model, wherein the contribution distribution data comprises a contribution score for each assets owner;
   outputting contribution distribution output data that comprises said contribution distribution data.
**2.** The method of embodiment 1, comprising filtering the received plurality of assets, said filtering comprises excluding assets that do not qualify to train the model.
**3.** The method of embodiment 2, wherein said filtering further comprises identifying a first asset that is identical or has a degree of similarity higher than a defined threshold to a second asset and excluding the second asset.
**4.** The method of any one of embodiments 1-3, wherein said plurality of assets are graphical assets and the generated product is a graphical product.
**5.** The method of embodiment 4, wherein said meta features comprises tag of the graphical asset, caption associated with the graphical asset, style of the graphical asset, objects in the graphical asset, or any combination thereof.
**6.** The method of embodiment 4 or 5, wherein the plurality of graphical assets comprises images, drawings, photos, or any combination thereof.
**7.** The method of any one of embodiments 1-6, comprising determining the contribution of one or more assets owners to a specific generated product asset by the AI model in response to a guidance prompt, said determining comprises
   extracting generated product meta features,
   identifying matching assets from the plurality of assets that has a degree of correlation above a selected threshold of one or more of their asset meta features with one or more of the generated product meta features,
   defining for the matching assets, based on the degree of correlation, a specific contribution score;
   wherein said contribution distribution output data further comprises said specific contribution score attributed to an asset owner.
**8.** The method of embodiment 7, wherein said plurality of assets are graphical assets and the generated product is a graphical product, and wherein the generated product meta features comprise tag of the generated graphical asset, caption associated with the graphical asset, style of the graphical asset, objects in the graphical asset, or any combination thereof.
**9.** The method of embodiment 7 or 8, wherein said determining further comprises calculating the similarity between a caption attributed to an asset and the guidance prompt for said identifying.
**10.** The method of any one of embodiments 7-9, wherein said determining further comprises calculating the similarity between a tag attributed to an asset and a contextual analysis of the guidance prompt for said identifying.
**11.** The method of any one of embodiments 7-10, wherein said determining further comprises calculating the similarity between a tag attributed to an asset and a graphical analysis of an image guidance prompt for said identifying.
**12.** The method of any one of embodiments 7-11, wherein said selected threshold is defined to obtain a selected limited number of matching assets with the highest correlation degree.
**13.** The method of any one of embodiments 1-12, wherein said outputting is triggered in response to a generated product by the AI model.
**14.** The method of embodiment 13, wherein said outputting comprises allocation of a payment associated with the generated product by the AI model based on the contribution score.
**15.** The method of any one of embodiments 1-14, wherein the contribution score is determined according to at least one of the following parameters: quantity of the assets, the age of each of the assets, community score indicative of an evaluation of users of the value of the asset.
**16.** A system for determining contribution to a generated product being generated by a generative artificial intelligence (AI) model, comprising:
   at least one processing circuitry configured for:
   receiving a plurality of assets that contributed to or intended to be used for the training of the AI model, wherein each asset of the plurality of assets is attributed to at least one owner that owns its copyrights;
   analyzing said plurality of assets to extract from each asset meta features and to generate, for each asset of the plurality of assets, an asset data set that comprises owners data indicative of the owner of the asset and the meta features;
   processing the plurality of asset data sets to determine a contribution distribution data indicative of the contribution distribution of assets owners to the training of the model, wherein the contribution distribution data comprises a contribution score for each assets owner; and for
   outputting contribution distribution output data that comprises said contribution distribution data.
**17.** The system of embodiment 16, wherein the processing circuitry is further configured for filtering the received plurality of assets, said filtering comprises excluding assets that do not qualify to train the model.
**18.** The system of embodiment 17, wherein said filtering further comprises identifying a first asset that is identical or has a degree of similarity higher than a defined threshold to a second asset and excluding the second asset.
**19.** The system of any one of embodiments 16-18, wherein said plurality of assets are graphical assets and the generated product is a graphical product.
**20.** The system of embodiment 19, wherein said meta features comprises tag of the graphical asset, caption associated with the graphical asset, style of the graphical asset, objects in the graphical asset, or any combination thereof.
**21.** The system of embodiment 19 or 20, wherein the plurality of graphical assets comprises images, drawings, photos, or any combination thereof.
**22.** The system of any one of embodiments 16-21, wherein the processing circuitry is further configured for determining the contribution of one or more assets owners to a specific generated product asset by the AI model in response to a guidance prompt, said determining comprises
   extracting generated product meta features,
   identifying matching assets from the plurality of assets that has a degree of correlation above a selected threshold of one or more of their asset meta features with one or more of the generated product meta features,
   defining for the matching assets, based on the degree of correlation, a specific contribution score;
   wherein said contribution distribution output data further comprises said specific contribution score attributed to an asset owner.
**23.** The system of embodiment 22, wherein said plurality of assets are graphical assets and the generated product is a graphical product, and wherein the generated product meta features comprise tag of the generated graphical asset, caption associated with the graphical asset, style of the graphical asset, objects in the graphical asset, or any combination thereof.
**24.** The system of embodiment 22 or 23, wherein said determining further comprises calculating the similarity between a caption attributed to an asset and the guidance prompt for said identifying.
**25.** The system of any one of embodiments 22-24, wherein said determining further comprises calculating the similarity between a tag attributed to an asset and a contextual analysis of the guidance prompt for said identifying.
**26.** The system of any one of embodiments 22-25, wherein said determining further comprises calculating the similarity between a tag attributed to an asset and a graphical analysis of an image guidance prompt for said identifying.
**27.** The system of any one of embodiments 22-26, wherein said selected threshold is defined to obtain a selected limited number of matching assets with the highest correlation degree.
**28.** The system of any one of embodiments 16-27, wherein said outputting is triggered in response to a generated product by the AI model.
**29.** The system of embodiment 28, wherein said outputting comprises allocation of a payment associated with the generated product by the AI model based on the contribution score.
**30.** The system of any one of embodiments 16-29, wherein the contribution score is determined according to at least one of the following parameters: quantity of the assets, the age of each of the assets, community score indicative of an evaluation of users of the value of the asset.
**31.** The system of any one of embodiments 16-30, wherein the at least one processing circuitry is further configured for calculating a relative contribution parameter indicative of the relative contribution to the training of the model between assets protected by copyrights and assets not protected by copyrights; wherein the distribution output data comprises said relative contribution parameter.
**32.** The system of claim 28, wherein said outputting comprises determining distribution parameters for attribution of value associated with the generated product by the AI model based on the contribution score.
**33.** The method of claim 13, wherein said outputting comprises determining distribution parameters for attribution of value associated with the generated product by the AI model based on the contribution score.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:

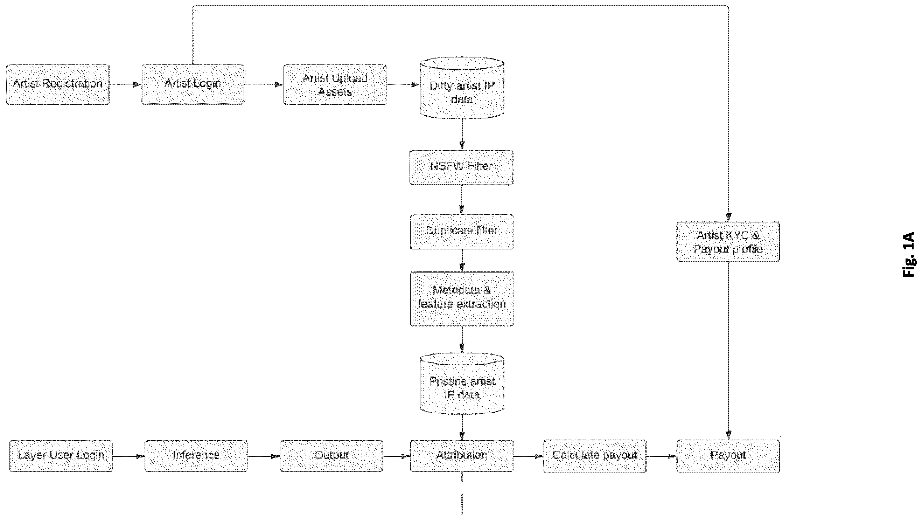

**Figs. 1A-1D** are flow diagrams exemplifying the method for determining contribution for generation of a generated product being generated by a generative artificial intelligence (AI) model, and the allocation of an income obtained for the generation of said generated product, according to an aspect of the present disclosure.

### DETAILED DESCRIPTION

The following figures are provided to exemplify embodiments and realization of the invention of the present disclosure.

**Figs. 1A-1D** are flow diagrams exemplifying the method for determining contribution for generation of a generated product being generated by a generative artificial intelligence (AI) model. By the example presented in **Figs. 1A-1D****,** owners of assets that contribute to the training of the model, and therefore to the generation of generative product produced by the model, can be attributed according to their relative contribution. In case that the use of the specific model is done according to a financial model, this method allows to allocate the income that is received for the generation of products with the model according to the relative contribution of the owners of the assets that were used to train the model in general or according to a specific relevancy of a certain asset to the generation of a specific product by the model.

While the example of **Figs. 1A-1D** is focused on a generative AI model for generating graphical products, in a similar manner this method can be used in different generative AI models with the necessary adaptations.

**Fig. 1A** exemplifies the method steps of a new assets owner. It should be noted that the example provides a comprehensive and wholistic explanation of the process, but not all the steps identified in the figures are essential for the execution of the method according to the present invention.

Therefore, the method exemplified in **Fig. 1A** comprises a registration process of a new assets owner. In this example, the asset owner is referred to as an artist, but it should be noted that the assets owner can be different than the artist that created the assets. After the registration is completed, the assets owner enters a plurality of assets files, each asset file comprises the asset and optionally data that is associated with the asset, such as description of the asset, the ownership distribution of the asset, the copyrights term of the asset, a caption of the asset, or any other meta data that is associated with the asset. The entered assets are then filtered by a no-safe-for-work filter that is configured to identify offensive assets or assets that are not suitable to be used in the training of a generative AI model. Furthermore, the assets are filtered by a duplication filter that is configured to identify assets that were already entered to the model, either by the same owner or by other owners. These two filters may trigger an alert or notification to the owner indicating the assets that were filtered and the reasons for their rejection from the process.

The assets that passed the filtration process are then going through a metadata and feature extraction process. An asset data set of features is generated for each asset, wherein the data set comprises a list of descriptive and quantitative features. The data set may comprise a caption or a tag associated with the asset. The feature extraction process from an image comprises an image to text process, in which an AI model is applied on the image and the output of the model generates a descriptive text of the image. The descriptive text may include a description of what is shown in the image and the style of the image, e.g. the style of a specific artist, the style of an era, the style of the environment of the image, etc. Some of the assets may be received with a tag already tagged to them and the extraction process extracts this tag. Further information that is extracted from the image is the copyrights that are associated with the image.

**Fig. 1A** further exemplifies the method steps of a user using the generative AI model for generating a new product, whether it is a graphical product (such as an image or a drawing), an audible product, a code product, or a textual product. The user inputs a guidance input describing the desired product from the generative AI model. The input may be a textual prompt, an image, a drawing, an audio file, or any combination thereof. The generative AI model then outputs the generated product and the attribution between the owners is calculated.

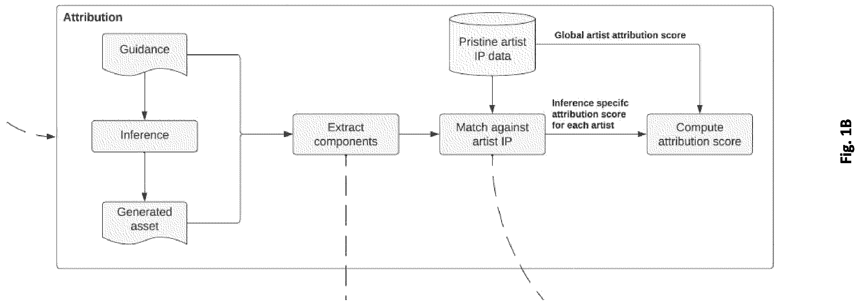

**Fig. 1B** exemplifies the attribution assessment process for the generated product. The guidance input and the generated product (that is referred in the figure as a generated asset) are analyzed to extract meta features therefrom comparable with the data set of the assets used for training the model.

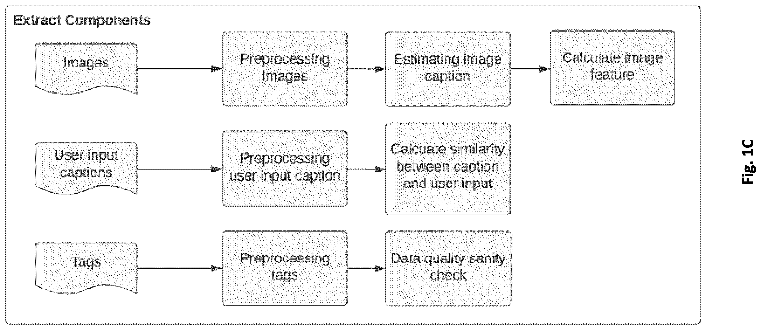

The extraction of the meta data is exemplified in **Fig. 1C****.** This figure exemplifies the extraction of features from the generated asset and an optional guidance input that comprises an input of an image, caption, and tag. It is to be noted that the guidance input may only include some of this components and the method does not require all of them.

For an image input, the image is processed to extract characterizing features of the image and to determine an estimation of the image caption. For any image input, a data set of image input features is generated based on the above processing. A similar process is performed on the generated image and the features for the generated image are extracted. Namely, an AI model capable of generating a descriptive text from an image is applied on the image. Therefore, the text generated based on the input image can be compared with text of the data set of assets used for the training of the generative AI model.

For caption input, the caption is processed to extract characterizing features of the caption that can be comparable with the features of the data set of the assets that were generated the model.

For a tag input, the tag is processed to evaluate its relevance to the image. The evaluation can be based on other users that ranked the tag of the image or by manual tagging of one or more reliable sources or users. The tag can also be analyzed with an AI model to evaluate its relevance or matching to the image. The tag can be also validated by the result of the AI model that generates descriptive text for the tagged image. Namely, for a tag input, a data quality sanity check is performed to ensure that the tag is relevant to the image.

A generated image data set is generated based on the extracted meta features from the guidance input and the generated image. The meta features are comparable to the assets' meta features of the data sets that are associated with each of the assets that was used in the training of the generative AI model.

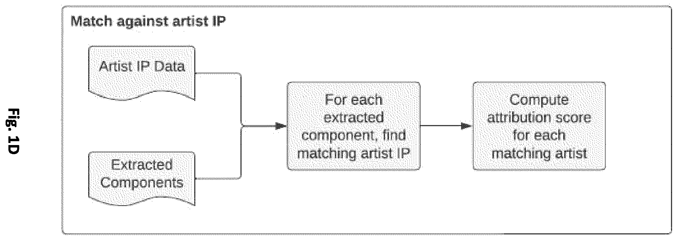

Then, according to the process exemplified in **Fig. 1B****,** the generated image data set is matched with the most correlated asset data set(s) according to certain correlation conditions. The matching process is exemplified in **Fig. 1D****.** For example, for each meta feature, a correlation score may be calculated, identifying the degree of correlation between the meta feature of the generated image and the meta feature of an asset contributed to the training of the model. For each meta feature, a different weight factor may be applied to contribute to the overall correlation score. The overall correlation score is calculated based on the sum of all the feature correlation scores, each multiplied by its weight factor. Then, the best matches between the generated image data set and the assets data set can be determined. The correlation condition can be either identifying a certain number of those asset data sets with the highest correlation score or can be a defined threshold that identifies any asset data set that has a higher correlation as a matching asset. For each of the assets that are found as matching to the generated image, an attribution score is computed. The attribution score determines the evaluated contribution of the specific asset to the generated image. Therefore, there may be a specific contribution distribution of several assets to the generation of the specific generated image.

Referring back to **Fig. 1B****,** for each generated image, there are two contribution scores that are calculated: (1) a general contribution score that is indicative of the contribution distribution of all the assets that were used for training the model until a certain time point, e.g. the time point of the generation of the generated image; (2) a specific contribution score that is indicative of the contribution distribution of the most probable influential assets for the specific generation of the generated image. By combining these two scores, according to a selected combination rule, a final contribution score can be determined that is indicative of the contribution distribution of the assets to the generation of specific generated image. The combination rule may be based on weight factors applied to each score. Namely, according to the desired allocation model, a higher weight factor may be applied to one of the scores. For example, in some models, the specific contribution score may be given a higher weight factor than the general contribution score, giving higher weight to the specific assets that contributed the most for the generation of the specific image. In other models, a higher weight factor may be given to the general contribution score.

According to the total contribution score, a financial model can be applied to allocate an income related to the usage of the generative AI model. According to the methodology of the present disclosure, the contribution of owners of assets to the training of the generative AI model and/or to the generation of a specific image in the model can be evaluated and the owners can be rewarded based on their relative contribution. Therefore, the present disclosure lays the foundation for any financial model that can be applied on such generative AI models in order to reward the assets owners contributing to the model.

## Claims

1. A method for determining contribution to a generated product being generated by a generative artificial intelligence (AI) model, comprising:
receiving a plurality of assets that contributed to or intended to be used for the training of the AI model, wherein each asset of the plurality of assets is attributed to at least one owner that owns its copyrights;
analyzing said plurality of assets to extract from each asset meta features and to generate, for each asset of the plurality of assets, an asset data set that comprises owners data indicative of the owner of the asset and the meta features;
processing the plurality of asset data sets to determine a contribution distribution data indicative of the contribution distribution of assets owners to the training of the model, wherein the contribution distribution data comprises a contribution score for each assets owner;
outputting contribution distribution output data that comprises said contribution distribution data.

2. The method of claim 1, comprising filtering the received plurality of assets, said filtering comprises excluding assets that do not qualify to train the model;
wherein said filtering further comprises identifying a first asset that is identical or has a degree of similarity higher than a defined threshold to a second asset and excluding the second asset.

3. The method of claim 1 or 2, wherein said plurality of assets are graphical assets and the generated product is a graphical product;
wherein said meta features comprises tag of the graphical asset, caption associated with the graphical asset, style of the graphical asset, objects in the graphical asset, or any combination thereof;
wherein the plurality of graphical assets comprises images, drawings, photos, or any combination thereof.

4. The method of any one of claims 1-3, comprising determining the contribution of one or more assets owners to a specific generated product asset by the AI model in response to a guidance prompt, said determining comprises
extracting generated product meta features,
identifying matching assets from the plurality of assets that has a degree of correlation above a selected threshold of one or more of their asset meta features with one or more of the generated product meta features,
defining for the matching assets, based on the degree of correlation, a specific contribution score;
wherein said contribution distribution output data further comprises said specific contribution score attributed to an asset owner.

5. The method of claim 4, wherein said plurality of assets are graphical assets and the generated product is a graphical product, and wherein the generated product meta features comprise at least one of tag of the generated graphical asset, caption associated with the graphical asset, style of the graphical asset, objects in the graphical asset, or any combination thereof;
wherein said determining further comprises calculating the similarity between a caption attributed to an asset and the guidance prompt for said identifying;
wherein said determining further comprises calculating the similarity between a tag attributed to an asset and a contextual analysis of the guidance prompt for said identifying.

6. The method of claim 5, wherein said determining further comprises calculating the similarity between a tag attributed to an asset and a graphical analysis of an image guidance prompt for said identifying;
wherein said selected threshold is defined to obtain a selected limited number of matching assets with a correlation degree that satisfies a certain condition.

7. The method of any one of claims 1-6, wherein said outputting is triggered in response to a generated product by the AI model.

8. The method of claim 7, wherein determining distribution parameters for attribution of value associated with the generated product by the AI model based on the contribution score.

9. The method of any one of claims 1-8, wherein the contribution score is determined according to at least one of the following parameters: quantity of the assets, the age of each of the assets, community score indicative of an evaluation of users of the value of the asset.

10. A system for determining contribution to a generated product being generated by a generative artificial intelligence (AI) model, comprising:
at least one processing circuitry configured for:
receiving a plurality of assets that contributed to or intended to be used for the training of the AI model, wherein each asset of the plurality of assets is attributed to at least one owner that owns its copyrights;
analyzing said plurality of assets to extract from each asset meta features and to generate, for each asset of the plurality of assets, an asset data set that comprises owners data indicative of the owner of the asset and the meta features;
processing the plurality of asset data sets to determine a contribution distribution data indicative of the contribution distribution of assets owners to the training of the model, wherein the contribution distribution data comprises a contribution score for each assets owner; and for
outputting contribution distribution output data that comprises said contribution distribution data.

11. The system of claim 10, wherein said plurality of assets are graphical assets and the generated product is a graphical product;
wherein said meta features comprises tag of the graphical asset, caption associated with the graphical asset, style of the graphical asset, objects in the graphical asset, or any combination thereof;
wherein the plurality of graphical assets comprises images, drawings, photos, or any combination thereof.

12. The system of claim 10 or 11, wherein the processing circuitry is further configured for determining the contribution of one or more assets owners to a specific generated product asset by the AI model in response to a guidance prompt, said determining comprises
extracting generated product meta features,
identifying matching assets from the plurality of assets that has a degree of correlation above a selected threshold of one or more of their asset meta features with one or more of the generated product meta features,
defining for the matching assets, based on the degree of correlation, a specific contribution score;
wherein said contribution distribution output data further comprises said specific contribution score attributed to an asset owner.

13. The system of claim 12, wherein said plurality of assets are graphical assets and the generated product is a graphical product, and wherein the generated product meta features comprise tag of the generated graphical asset, caption associated with the graphical asset, style of the graphical asset, objects in the graphical asset, or any combination thereof.

14. The system of claim 12 or 13, wherein said determining further comprises calculating the similarity between a caption attributed to an asset and the guidance prompt for said identifying;
wherein said determining further comprises calculating the similarity between a tag attributed to an asset and a contextual analysis of the guidance prompt for said identifying;
wherein said determining further comprises calculating the similarity between a tag attributed to an asset and a graphical analysis of an image guidance prompt for said identifying;
wherein said selected threshold is defined to obtain a selected limited number of matching assets with a correlation degree that satisfies a certain condition.

15. The system of any one of claims 10-14, wherein said outputting is triggered in response to a generated product by the AI model;
wherein said outputting comprises determining distribution parameters for attribution of value associated with the generated product by the AI model based on the contribution score;
wherein the contribution score is determined according to at least one of the following parameters: quantity of the assets, the age of each of the assets, community score indicative of an evaluation of users of the value of the asset;
wherein the at least one processing circuitry is further configured for calculating a relative contribution parameter indicative of the relative contribution to the training of the model between assets protected by copyrights and assets not protected by copyrights; wherein the distribution output data comprises said relative contribution parameter.
